Europäisches Patentamt

European Patent Office

Office européen des brevets

(11) Veröffentlichungsnummer: **0 198 485 B1**

# EUROPÄISCHE PATENTSCHRIFT

(45) Veröffentlichungstag der Patentschrift: **11.12.91**

(51) Int. Cl.⁵: **B62J 6/00**

(21) Anmeldenummer: **86105236.3**

(22) Anmeldetag: **16.04.86**

(54) **Vorrichtung für elektrische Verbraucher, insbesondere für Fahrräder mit und ohne Hilfsmotor.**

(30) Priorität: **16.04.85 DE 8511242 U**

(43) Veröffentlichungstag der Anmeldung:
**22.10.86 Patentblatt 86/43**

(45) Bekanntmachung des Hinweises auf die
Patenterteilung:
**11.12.91 Patentblatt 91/50**

(84) Benannte Vertragsstaaten:
**CH DE FR GB IT LI NL**

(56) Entgegenhaltungen:
**DE-A- 2 341 068**
**FR-A- 948 747**

**Patent Abstracts of Japan, Band 6, Nr. 256**
**(M-179)(1134) 15. Dezember 1982 & JP - A -**
**57 151 442 (Masahide Ichikawa) 18-09-1982**

(73) Patentinhaber: **Enform AG**
**Stockerstrasse 42**
**CH-8002 Zürich(CH)**

(72) Erfinder: **Hegi, Robert**
**Bühlstrasse 10**
**CH-8113 Boppelsen(CH)**
Erfinder: **Flückiger, Ernst**
**Hätzelwisen 12/5**
**CH-8602 Wangen(CH)**

(74) Vertreter: **Eitle, Werner, Dipl.-Ing. et al**
**Hoffmann, Eitle & Partner Patentanwälte Ara-**
**bellastrasse 4**
**W-8000 München 81(DE)**

## Beschreibung

Die Erfindung bezieht sich auf eine Vorrichtung für elektrische Verbraucher, insbesondere für Fahrräder mit und ohne Hilfsmotor, mit einem Generator, einem Akkumulator und einer Umschaltelektronik für den Generator- oder Akkumulatorbetrieb, die gemeinsam in einem geschlossenen Gehäuse angeordnet sind, und mit einem Antrieb für den Generator, der mit einem Rad des Fahrrads zusammenwirkt.

Vorrichtungen für elektrische Verbraucher an Fahrrädern, beispielsweise für Fahrrad-Beleuchtungen, sind in unterschiedlichster Ausführungsform bekannt. Die althergebrachte, klassische Fahrrad-Beleuchtung besteht aus einem Dynamo, welcher über sein Antriebsritzel vom Vorderrad des Fahrrades betrieben wird. Entsprechende elektrische Leitungen zu Scheinwerfer und Rückleuchte stellen die elektrische Verbindung dar. Bei eingeschaltetem Dynamo wird während des Fahrens Strom erzeugt, so daß Scheinwerfer und Rückleuchte ausreichend versorgt werden können. Bei nur sehr geringer Fahrgeschwindigkeit fällt die vom Dynamo gelieferte Leistung sehr stark ab, so daß die Beleuchtung des Fahrrades nur unzureichend ist. Im Stand ist natürlich überhaupt keine Beleuchtung gegeben. Beim sehr langsamen Fahren und beim Anhalten ist in der Dunkelheit der Fahrer sehr gefährdet, da er leicht übersehen werden kann.

Es ist des weiteren eine Fahrrad-Beleuchtung bekannt, bei welcher zusätzlich zu dem vom Vorderrad angetriebenen Dynamo aufladbare Batterien (NiCd-Akkumulatoren) vorgesehen sind (Colani-electronic Standlicht-Batterieanlage der Firma UNION Fröndenberg). Vor der ersten Benutzung des Standlichtes müssen die Batterien der bekannten Anlage aufgeladen werden. Wird nach dem Einschalten nicht gefahren oder die Lichtmaschine wieder abgeschaltet, stehen aus den Batterien für 1 Stunde Strom für Scheinwerfer und Schlußleuchte zur Verfügung. Danach müssen die Batterien wieder geladen werden. Beim Fahrbetrieb steuert eine Elektronik die Stromversorgung des Scheinwerfers und der Schlußleuchte aus dem Dynamo oder den Batterien in Abhängigkeit von der Fahrgeschwindigkeit. Bei einer Geschwindigkeit über 8 km/h werden die Batterien abgeschaltet und als Stromquelle für die Beleuchtung dient nur der Dynamo. Schließlich erzeugt bei einer Fahrgeschwindigkeit von über 15 km/h der Dynamo mehr Leistung als für die Versorgung des Scheinwerfers und der Schlußleuchte erforderlich ist, so daß zusätzlich die Batterien nachgeladen werden. Die in dieser bekannten Beleuchtungsanlage verwendeten Batterien bzw. Akkumulatoren müssen folglich zumindest einmal am Anfang durch ein handelsübliches Universalladegerät aufgeladen werden, wobei die Ladezeit ca. 15 Std. beträgt. Bei Fahrradhaltern, die relativ selten fahren und dann auch nicht mit ausreichend hoher Geschwindigkeit fahren und zudem öfter anhalten müssen, werden die Akkumulatoren sehr oft leer sein, so daß eine relativ häufige Aufladung der Batterien notwendig sein wird.

Aufgabe der Erfindung ist es deshalb, eine Vorrichtung der eingangs genannten Art zu schaffen, welche eine permanente Aufladung des Akkumulators beim Fahren erlaubt und zudem eine kompakte Bauweise aufweist.

Diese Aufgabe wird durch eine erfindungsgemäße Vorrichtung mit den kennzeichnenden Merkmalen des Anspruchs 1 dadurch gelöst, daß

- der Antrieb ein kraftschlüssig am Radzentrum (Radnabe) angeordneter Zahnradantrieb ist,
- ein Übersetzungs-Getriebe dem Generator vorgeschaltet ist, das derart ausgelegt ist, daß bei Betrieb des Fahrrads eine permanente Aufladung des Akkumulators gewährleistet ist,
- das Übersetzungs-Getriebe in dem geschlossenen Gehäuse koaxial ausgerichtet mit dem Generator angeordnet ist, und
- eine flexible Welle den Antrieb kraftschlüssig mit dem Übersetzungsgetriebe koppelt.

Die Anordnung eines Übersetzungsgetriebes ermöglicht die Erreichung der vorgeschriebenen Leistungswerte, abgestuft auf die verschiedenen km/h. Eine permanente Aufladung der Akkumulatoren ist gewährleistet. Dabei ist der wesentliche Vorteil darin zu sehen, daß auch bei sehr geringer Fahrgeschwindigkeit die Akkumulatoren konstant aufgeladen werden, so daß selbst sehr langsame Fahrer stets aufgeladene Akkumulatoren und damit immer eine zufriedenstellende Standbeleuchtung an ihrem Fahrrad vorweisen können. Die Sicherheit im Verkehr der Fahrradfahrer wird folglich durch die erfindungsgemäße Fahrrad-Beleuchtung entscheidend erhöht.

Gemäß einer vorteilhaften Weiterbildung ist die flexible Welle der erfindungsgemäßen Anlage mit dem Getriebe über eine Anschlußkupplung verbunden. Von Vorteil kann dabei sein, wenn diese Kupplung eine Gewindekupplung ist, wodurch die Montage der erfindungsgemäßen Beleuchtungsanlage wesentlich vereinfacht wird. Auch kann bei Beschädigung beispielsweise der flexiblen Welle diese einfach und schnell von der Kompaktheit abgenommen und gegen eine neue ausgetauscht werden.

Als vorteilhaft wirkt sich auch aus, wenn erfindungsgemäß der Antrieb ein am Vorderradzentrum angeordneter Zahnrad- oder Reibradantrieb ist. Ein solcher Antrieb ist relativ robust und ist zudem an einer Stelle des Rades angeordnet, welche mit dem Straßenschmutz weniger in Berührung kommt. Hierdurch wird einerseits der Antrieb geschont; andererseits werden die relativ verschleißanfälligen Fahrradmäntel durch die wegfallende zusätzliche Belastung durch Antriebsritzel sehr geschont.

Die Vorteile des erfindungsgemäßen Zahn- und/oder Reibrades bestehen darin, daß durch das Vorsehen mindestens einer Klaue eine einfache Verdrehsicherung erreicht wird. Die Keilform der Klauen ermöglicht eine einfache Befestigung des Antriebsrades zwischen den Speichen. Für eine höchstmögliche Belastbarkeit des Antriebsrades entspricht die Gesamtanzahl der Klauen der Anzahl der durch die Radspeichen auf einer Seite eines Rades gebildeten Kreuzungspunkte. Die Verwendung eines durchsichtigen Kunststoffes für das Antriebsrad ergibt einen guten optischen Gesamteindruck. Die Verwendung von Kunststoff hat die Vorteile, daß die Teile einfach hergestellt werden können und die Verschleißerscheinungen durch Umwelteinflüsse verringert sind. Durch das erfindungsgemäße Antriebsrad ergibt sich eine vielseitige Anwendbarkeit bei Rädern unterschiedlicher Durchmesser. Die Kombination eines Reib- und Zahnrades gewährleistet unter allen Fahrbedingungen eine optimale Kraftübertragung.

Durch das Vorsehen mehrerer Anschlußmöglichkeiten für verschiedene elektrische Verbraucher erhöhen sich die Einsatzmöglichkeiten der erfindungsgemäßen Vorrichtung.

Eine elektrisch ansteuerbare Kupplung, die das Ritzel von dem Antriebsrad trennt, trägt zum einen zum Bedienungskomfort und zum anderen zur Verkehrssicherheit bei, da der Kupplungsvorgang selbsttätig abläuft.

Die kompakte Anordnung in dem Gehäuse ist eine wasser-, hitze- und kältebeständige Ausführung geschaffen worden.

Von Vorteil kann des weiteren noch sein, wenn am Gehäuse mindestens eine Befestigungsschelle vorgesehen ist. Über diese Befestigungsschellen kann die Kompakteinheit in einfacher und gleichzeitig sicherer Weise am Fahrradgestell angebracht werden. Die flexible Antriebswelle als auch die Leitungen zu Scheinwerfer und Rückleuchte können hierdurch ebenfalls am Fahrradgestell in unauffälliger Weise entlanggeleitet werden.

Die Ausbildung von Ausnehmungen an den Seitenkanten der Klaue hat den Vorteil, daß sowohl ein Formschluß als auch ein Reibschluß möglich ist.

Der Erfindungsgegenstand wird nachstehend anhand des in der beigefügten Zeichnung dargestellten Ausführungsbeispieles näher erläutert. Dabei zeigen:

Fig 1a und b     die Anordnung einer erfindungsgemäßen Vorrichtung an einem Fahrrad;

Fig. 2     eine Schnittansicht in axialer Richtung der Kompakteinheit der erfindungsgemäßen Vorrichtung;

Fig. 3     ein Schaltschema, das die Anschlußmöglichkeiten für mehrere elektrische Verbraucher zeigt;

Fig. 4     einen erfindungsgemäßen Antrieb in einer Ansicht von vorne, und

Fig. 5     einen erfindungsgemäßen Antrieb in einer Ansicht von der Seite.

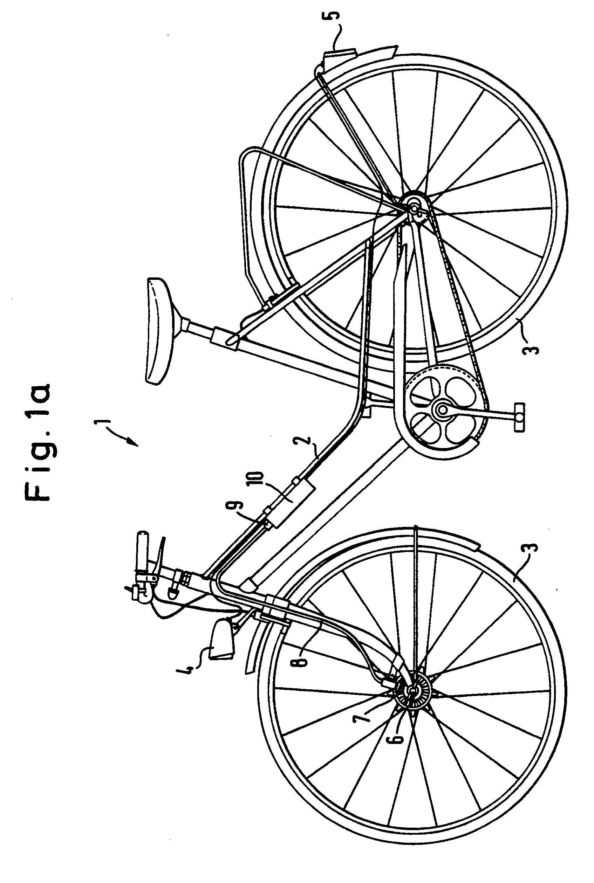

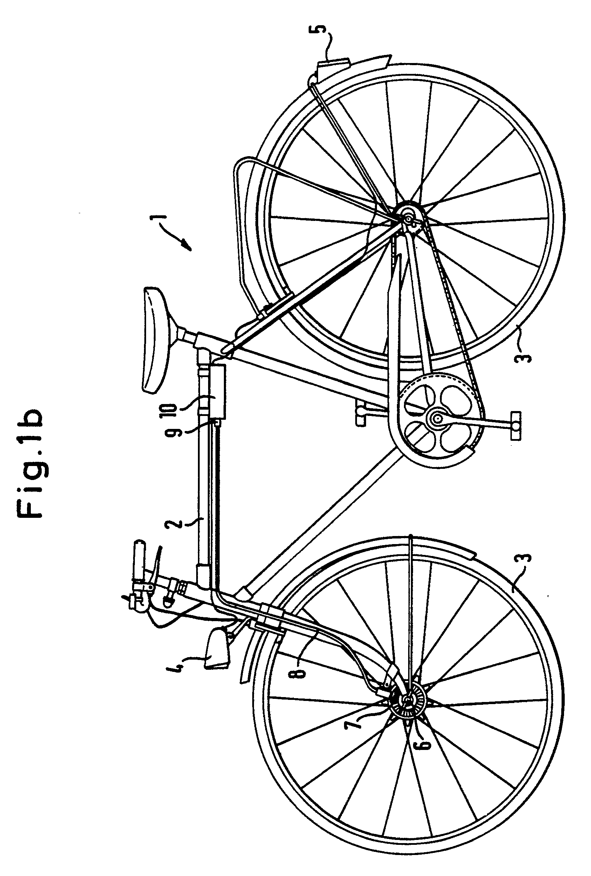

Wie insbesondere aus Fig. 1 zu entnehmen ist, ist die erfindungsgemäße Vorrichtung an einem Fahrrad 1 mit einem Gestell 2, Rädern 3, einem Scheinwerfer 4 und einer Rückleuchte 5 angeordnet. Ein an der Radnabe 6 eingreifender Antrieb 7 ist am Vorderrad 3 vorgesehen. Dieser Antrieb 7 ist über eine flexible Welle 8 mit einer am Fahrradgestell 2 über Befestigungsschellen 9 angebrachten Kompakteinheit 10 verbunden. Die Kompakteinheit 10 kann dabei in der Ausführung des Fahrrades 1 als Herrenfahrrad im wesentlichen unter dem Sitz an der oberen Stange des Gestells befestigt sein. Bei der Ausführung des Fahrrades 1 als Damenrad ist eine Anordnung an der schrägen oberen Verstärkungsstrebe des Gestelles vorgesehen.

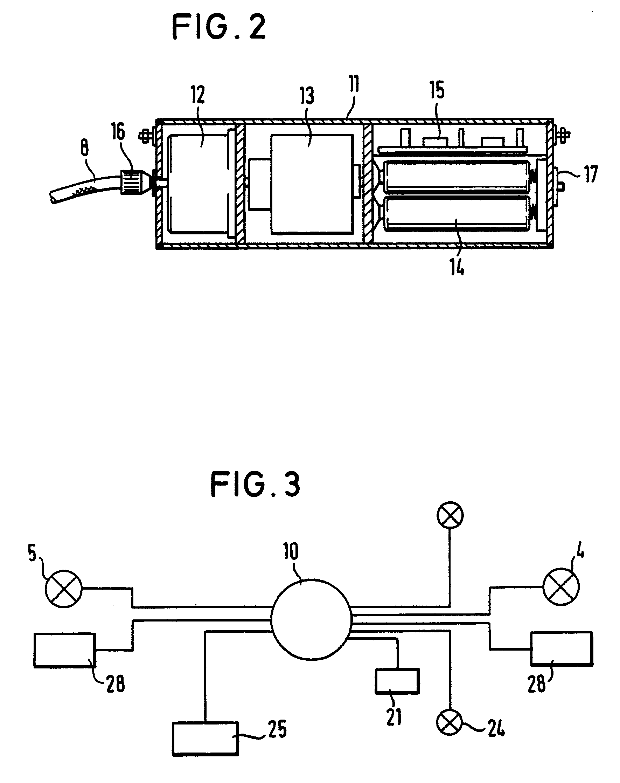

Wie insbesondere aus Fig. 2 ersichtlich ist, besteht die Kompakteinheit 10 im wesentlichen aus einem Gehäuse 11, in welchem koaxial gesehen nacheinander ein Getriebe 12, ein Generator 13 und Akkumulatoren 14 angeordnet sind. Neben den Akkumulatoren 14 ist eine Umschaltelektronik 15 im Gehäuse untergebracht. Die flexible Welle 8 ist über eine Kupplung 16 mit dem Getriebe 12 verbunden. Des weiteren ist ein Schalter 17 vorgesehen, über welchen die Fahrrad-Beleuchtung insgesamt ein- und ausgeschaltet werden kann. Am Gehäuse 11 sind Anschlüsse für den Scheinwerfer 4 und die Rückleuchte 5 sowie für Masse vorgesehen.

Fig. 3 zeigt ein Schaltschema, bei dem an die erfindungsgemäße Vorrichtung mehrere elektrische Verbraucher angeschlossen sind. Das Schaltschema ist vereinfachenderweise als Gleichspannungsquelle dargestellt, an die folgende elektrische Verbraucher angeschlossen sind: Beleuchtung 4, 5 für hinten und vorne, Blinker 24 für links und rechts, die insbesondere bei Fahrrädern mit Hilfsmotoren vorgesehen sind, eine elektrisch ansteuerbare Servoschaltung 25 für die einzelnen Gänge, eine elektrisch ansteuerbare Servoschaltung 28 für einen Bremskraftverstärker und eine elektrisch ansteuerbare Kupplung 21 zum Ein- und Auskuppeln des Antriebsritzels vom Antriebsrad.

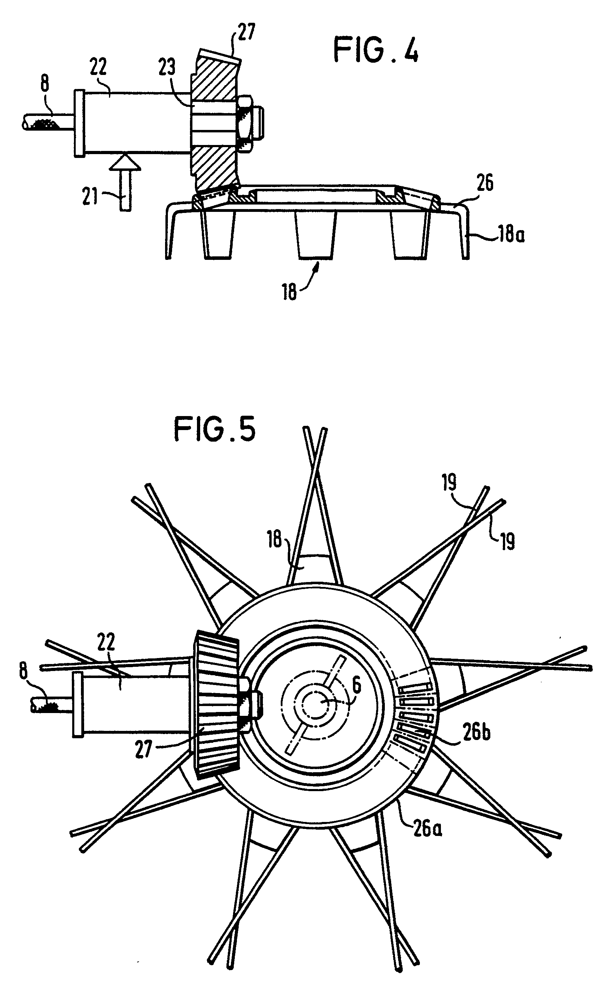

Die Fig. 4 und 5 zeigen den erfindungsgemäßen Antrieb 7 voll vorne und von der Seite. Die Figuren zeigen ein Antriebsrad 26, das als Zahnrad ausgebildet ist und im Eingriff mit einem Ritzel 27 steht. Am Umfang des Antriebsrades 26 sind neun keilförmige Klauen 18 abgebildet, die in dieser Ausführungsform jeweils unterhalb eines Kreuzungspunktes zweier Speichen 19 eingreifen. Bei der Montage des Antriebsrades 26 werden die Speichen 19 geringfügig durch das Einschieben der Klauen 18 verformt. Dadurch ergibt sich durch den Reibschluß ein zusätzlicher Halt.

In einer besonderen Ausführungsform weist das Antriebsrad 26 vierundvierzig Zähne und das Ritzel 27 elf Zähne auf. Das Ritzel 27 ist auf einer Welle 22 durch einen Sechskant 23 gegen Verdrehung gesichert. Die elastische Welle 8 wird durch die Welle 22 angetrieben. Ferner kann die Welle 22 durch eine nicht dargestellte Kupplung ein- und ausgekuppelt werden, die in einer besonderen Ausführungsform elektrisch ansteuerbar ist.

Das leistungsstarke Getriebe 12 der erfindungsgemäßen Vorrichtung ist notwendig, da ein leistungsstarker Generator verwendet wird, der für die o.g. elektrischen Verbraucher die notwendige Energie bereitstellen muß. In einer besonderen Ausführungsform beträgt die Arbeitsspannung 7,4 Volt. Je nach Anzahl der elektrischen Verbraucher ist das verwendete Getriebe 12 optimal ausgelegt.

Die erfindungsgemäße Vorrichtung kann auch für Fahrräder mit Hilfsmotor, der beispielsweise einen Hubraum von 30 cm$^3$ aufweist, verwendet werden.

**Patentansprüche**

1. Vorrichtung für elektrische Verbraucher, insbesondere für Fahrräder mit und ohne Hilfsmotor,

   - mit einem Generator (13), einem Akkumulator (14) und einer Umschaltelektronik (15) für den Generator- und Akkumulatorbetrieb, die gemeinsam in einem geschlossenen Gehäuse (11) angeordnet sind, und
   - mit einem Antrieb (7) für den Generator (13), der mit einem Rad des Fahrrads zusammenwirkt,

   dadurch **gekennzeichnet, daß**

   - der Antrieb (7) ein kraftschlüssig am Radzentrum (Radnabe) angeordneter Zahnradantrieb (26, 27) ist,
   - ein Übersetzungs-Getriebe (12) dem Generator (13) vorgeschaltet ist, das derart ausgelegt ist, daß bei Betrieb des Fahrrads eine permanente Aufladung des Akkumulators (14) gewährleistet ist,
   - das Übersetzungs-Getriebe (12) in dem geschlossenen Gehäuse (11) koaxial ausgerichtet mit dem Generator (13) angeordnet ist, und
   - eine flexible Welle (8) den Antrieb (7) kraftschlüssig mit dem Übersetzungsgetriebe (12) koppelt.

2. Vorrichtung nach Anspruch 1, dadurch **gekennzeichnet, daß** die flexible Welle (8) mit dem Getriebe (12) über eine Anschlußkupplung (16) verbunden ist.

3. Vorrichtung nach Anspruch 2, dadurch **gekennzeichnet, daß** die Kupplung (16) eine Gewindekupplung ist.

4. Vorrichtung nach einem der vorhergehenden Ansprüche, dadurch **gekennzeichnet, daß** der Antrieb (26, 27) aus einem Antriebsrad (26) besteht, das eine kreisförmige Form (26a) hat und das auf der einen Seite eine konzentrisch angeordnete Antriebsfläche (26b) aufweist, mit dem ein Antriebsritzel (27) in Eingriff kommt und daß auf der zur Antriebsfläche (26b) gegenüberliegenden Seite mindestens eine Klaue (18) ausgebildet ist, die senkrecht zur Kreisfläche (26a) angeordnet ist.

5. Vorrichtung nach Anspruch 4, dadurch **gekennzeichnet, daß** die Anzahl der Klauen (18) der Anzahl der durch Radspeichenpaare (19) auf der einen Seite eines Rades (3) gebildeten Kreuzungspunkte entspricht.

6. Vorrichtung nach Anspruch 5, dadurch **gekennzeichnet, daß** die Form einer Klaue (18) sowohl waagrecht als auch senkrecht zur Kreisfläche (26a) keilförmig ausgebildet ist.

7. Vorrichtung nach einem der vorhergehenden Ansprüche, dadurch **gekennzeichnet, daß** der senkrecht zur Kreisfläche ausgebildete Abschnitt (18a) der Klaue (18) auf einem Durchmesser angeordnet ist, der ein Einschieben der Klaue unterhalb eines Kreuzungspunktes zweier Speichen (19) in einer solchen Weise ermöglicht, daß die Speichen (19) elastisch verformt werden.

8. Vorrichtung nach einem der Ansprüche 1 bis 6, dadurch **gekennzeichnet, daß** der senkrecht zur Kreisfläche ausgebildete Abschnitt (18a) der Klauen (18) auf einem Durchmesser angeordnet ist, der ein Einschieben der Klaue (18) oberhalb eines Kreuzungspunktes zweier Speichen (19) in einer solchen Weise ermöglicht, daß die Speichen (19) elastisch verformt werden.

9. Vorrichtung nach einem der vorhergehenden Ansprüche, dadurch **gekennzeichnet, daß** als Werkstoff für das Antriebsrad (26) ein durchsichtiger Kunststoff verwendet wird.

10. Vorrichtung nach einem der vorhergehenden Ansprüche, dadurch **gekennzeichnet, daß** das Antriebsrad (26) als ein Zahnrad ausgebildet ist, dessen Antriebsfläche (26b) aus einem Zahnkranz (20) besteht.

11. Vorrichtung nach einem der Ansprüche 1 bis 9, dadurch **gekennzeichnet, daß** das Antriebsrad (26) als ein Reibrad ausgebildet ist.

12. Vorrichtung nach einem der vorhergehenden Ansprüche, dadurch **gekennzeichnet, daß** das mit dem Antriebsrad (26) in Eingriff stehende Ritzel (27) in bekannter Weise ausgebildet ist.

13. Vorrichtung nach einem der vorhergehenden Ansprüche, dadurch **gekennzeichnet, daß** das Ritzel (27) aus Kunststoff besteht.

14. Vorrichtung nach einem der vorhergehenden Ansprüche, dadurch **gekennzeichnet, daß** das Ritzel (27) durch eine Kupplung (21) außer Eingriff mit dem Antriebsrad (26) bringbar ist.

15. Vorrichtung nach einem der vorhergehenden Ansprüche, dadurch **gekennzeichnet, daß** das Getriebe (12) entsprechend dem Strombedarf der elektrischen Verbraucher ausgelegt ist.

16. Vorrichtung nach einem der vorhergehenden Ansprüche, dadurch **gekennzeichnet, daß** am Gehäuse (11) mindestens eine Befestigungsschelle (9) zum Befestigen der aus Getriebe (12), Generator (13), Akkumulatoren (14), Umschaltelektronik (15) und Gehäuse (14) gebildeten Kompakteinheit (10) am Fahrrad-Gestell (2) vorgesehen ist.

17. Vorrichtung nach einem der vorhergehenden Ansprüche, dadurch **gekennzeichnet, daß** die Kupplung (21) elektrisch ansteuerbar ist.

## Claims

1. A device for powering electrical loads, in particular for bicycles with and without an auxiliary motor,
   - comprising a generator (13), an accumulator (14) and an electronic switchover circuit (15) for the operation of the generator and the accumulator, which are commonly arranged in a closed housing (11), and
   - comprising a drive means (7) for the generator (13) which co-operates with a wheel of the bicycle,

characterised in that

   - the drive means (7) is a gearwheel drive (26, 27) which is arranged at the centre of the wheel (wheel hub) by frictional engagement,
   - a transmission gear means (12) is connected in advance of the generator (13), which transmission gear means (12) is designed such that when the bicycle is in operation permanent charging of the accumulator (14) is ensured
   - the transmission gear means (12) is arranged in the closed housing (11) in co-axial alignment with the generator (13), and
   - a flexible shaft (8) couples the drive means (7) to the transmission gear means (12) by frictional engagement.

2. A device as claimed in Claim 1, characterised in that the flexible shaft (8) is connected to the transmission gear means (12) via a connection coupling (16).

3. A device as claimed in Claim 2, characterised in that the coupling (16) is a threaded joint.

4. A device as claimed in one of the preceding claims, characterised in that the drive means (26, 27) comprises a driving wheel (26) which is of circular formation (26a) and which on one side has a concentrically arranged driving surface (26b) with which a drive pinion (27) engages, and that on the side opposite the driving surface (26b) at least one claw (18) is formed, which extends at right angles to the circular surface (26a).

5. A device as claimed in Claim 4, characterised in that the number of claws (18) corresponds to the number of cross-over points formed by pairs of wheel spokes (19) on the first side of a wheel (3).

6. A device as claimed in Claim 5, characterised in that the shape of a claw (18) is wedge-shaped both in the horizontal direction of the circular surface (26a) and at right angles to said surface.

7. A device as claimed in one of the preceding claims, characterised in that the portion (18a) of the claw (18) which extends at right angles to the circular surface is arranged on a diameter which allows the claw to be inserted below a cross-over point of two spokes (19) in such manner that the spokes (19) become elastically deformed.

8. A device as claimed in one of Claims 1 to 6, characterised in that the portion (18a) of the claws (18) which extends at right angles to the circular surface is arranged on a diameter which allows the claw (18) to be inserted above a cross-over point of two spokes (19) in such manner that the spokes (19) become elastically deformed.

9. A device as claimed in one of the preceding claims, characterised in that a transparent plastics material is used as material for the driving wheel (26).

10. A device as claimed in one of the preceding claims, characterised in that the driving wheel (26) is designed as a gearwheel, the driving surface (26b) of which comprises a ring gear (20).

11. A device as claimed in one of Claims 1 to 9, characterised in that the driving wheel (26) is designed as a friction wheel.

12. A device as claimed in one of the preceding claims, characterised in that the pinion (27), which is in engagement with the driving wheel (26), is designed in a manner known per se.

13. A device as claimed in one of the preceding claims, characterised in that the pinion (27) is made of plastics material.

14. A device as claimed in one of the preceding claims, characterised in that the pinion (27) can be brought out of engagement with the driving wheel (26) by a coupling means (21).

15. A device as claimed in one of the preceding claims, characterised in that the transmission gear means (12) is designed in accordance with the power requirement of the electrical loads.

16. A device as claimed in one of the preceding claims, characterised in that at least one fastening clip (9) for the attachment of the compact unit (10), formed by the transmission gear means (12), generator (13), accumulators (14), electronic switch-over circuit (15) and housing (14), to the bicycle frame (2) is provided on the housing (11).

17. A device as claimed in one of the preceding claims, characterised in that the coupling (21) can be driven electrically.

**Revendications**

1. Dispositif pour utilisateurs de courant, en particulier sur une bicyclette ou vélomoteur,
   - avec un générateur (13), un accumulateur (14) et une électronique de commutation (15) pour le fonctionnement du générateur et de l'accumulateur, disposés conjointement dans un carter (11) fermé, et
   - avec un entraînement (7) pour le générateur (13), qui coopère avec une roue du cycle,
   caractérisé en ce que
   - l'entraînement (7) est un entraînement à roue dentée (26,27) à action mécanique, disposé au centre de la roue (moyeu de roue),
   - une transmission surmultiplicatrice (12) est mise en circuit en amont du générateur (13) et conçue de façon qu'en fonctionnement du cycle, il soit assuré une charge permanente de l'accumulateur (14),
   - la transmission surmultiplicatrice (12) est disposée dans le carter fermé (11), orientée coaxialement au générateur (13), et
   - un arbre flexible (8) accouple mécaniquement l'entraînement (7) à la transmission surmultiplicatrice (12).

2. Dispositif selon la revendication 1, caractérisé en ce que l'arbre flexible (8) est relié à la transmission (12) par l'intermédiaire d'un accouplement de raccordement (16).

3. Dispositif selon la revendication 2, caractérisé en ce que l'accouplement (16) est un accouplement fileté.

4. Dispositif selon l'une des revendications précédentes, caractérisé en ce que l'entraînement (26,27) se compose d'une roue d'entraînement (26) de forme circulaire (26a) et présente sur une face une surface d'entraînement (26b) concentrique, avec laquelle un pignon d'entraînement vient en prise, et que, sur la face opposée à la face d'entraînement (26b), est réalisé au moins une griffe (18) perpendiculaire à la surface circulaire (26a).

5. Dispositif selon la revendication 4, caractérisé en ce que le nombre de griffes (18) correspond au nombre des points de croisement formés par des couples de rayons (19), d'un côté d'une roue (3).

6. Dispositif selon la revendication 5, caractérisé en ce que la forme d'une griffe (18) est une forme en coin, tant horizontalement qu'également perpendiculairement à la surface circulaire (26a).

7. Dispositif selon l'une des revendications précédentes, caractérisé en ce que la section (18a), réalisée perpendiculairement à la surface circulaire, des griffes (18) est située sur un diamètre qui permet une insertion des griffes audessous d'un point de croisement de deux rayons (19), de telle manière que les rayons (19) soient déformés élastiquement.

8. Dispositif selon l'une des revendications 1 à 6, caractérisé en ce que la section (18a), réalisée perpendiculairement à la surface circulaire, des griffes (18) est située sur un diamètre qui permet une insertion des griffes au-dessus d'un point de croisement de deux rayons (19), de telle manière que les rayons (19) soient déformés élastiquement.

9. Dispositif selon l'une des revendications précédentes, caractérisé en ce que le matériau utilisé pour la roue d'entraînement (26) est une matière synthétique transparente.

10. Dispositif selon l'une des revendications précédentes, caractérisé en ce que la roue d'entraînement (26) est réalisée sous forme de roue dentée dont la surface d'entraînement (26b) est composée d'une couronne dentée (20).

11. Dispositif selon l'une des revendications 1 à 9, caractérisé en ce que la roue d'entraînement (26) est réalisée sous forme de roue à friction.

12. Dispositif selon l'une des revendications précédentes, caractérisé en ce que le pignon (27) qui est en prise avec la roue d'entraînement (26) est réalisé de manière connue.

13. Dispositif selon l'une des revendications précédentes, caractérisé en ce que le pignon (27) est réalisé en matière synthétique.

14. Dispositif selon l'une des revendications précédentes, caractérisé en ce que le pignon (27) est susceptible d'être désolidarisé de la roue d'entraînement (26) par un accouplement (21).

15. Dispositif selon l'une des revendications précédentes, caractérisé en ce que la transmission (12) est conçue en fonction de la consommation des utilisateurs électriques.

16. Dispositif selon l'une des revendications précédentes, caractérisé en ce qu'est prévu que le carter (11) au moins un collier de fixation (9), pour fixer sur le cadre de cycle (2) l'unité compacte (10) formée par la transmission (12), le générateur (13), les accumulateurs (14), l'électronique de commutation (15) et le carter (14).

17. Dispositif selon l'une des revendications précédentes, caractérisé en ce que l'accouplement (21) est à commande électrique.

# Fig. 1a

EP 0 198 485 B1

Fig.1b

# FIG.2

# FIG.3

FIG.4

FIG.5